(19) Europäisches Patentamt
European Patent Office
Office européen des brevets

(11) Veröffentlichungsnummer: **0 021 304**
**B1**

(12) # EUROPÄISCHE PATENTSCHRIFT

(45) Veröffentlichungstag der Patentschrift: **16.02.83**

(51) Int. Cl.³: **C 09 B 57/02**

(21) Anmeldenummer: **80103347.3**

(22) Anmeldetag: **16.06.80**

(54) **Cumarinverbindungen sowie deren Herstellung und Verwendung als Farbstoffe.**

(30) Priorität: **25.06.79 DE 2925546**

(43) Veröffentlichungstag der Anmeldung: **07.01.81 Patentblatt 81/01**

(45) Bekanntmachung des Hinweises auf die Patenterteilung: **16.02.83 Patentblatt 83/07**

(84) Benannte Vertragsstaaten: **CH DE FR GB IT LI**

(56) Entgegenhaltungen:
**DE A 2 702 237**
**GB A 1 269 004**
**GB A 1 313 253**
**GB A 1 318 975**
**GB A 2 006 253**
**US A 3 014 041**
**US A 3 288 801**
**US A 3 496 188**
**US A 3 704 302**
**US A 3 776 905**
**US A 3 816 413**
**US A 3 839 333**
**US A 3 839 351**
**US A 3 968 119**
**US A 4 055 568**

**Die Akte enthält technische Angaben, die nach dem Eingang der Anmeldung eingereicht wurden und die nicht in dieser Patentschrift enthalten sind.**

(73) Patentinhaber: **BAYER AG**
**Zentralbereich Patente, Marken und Lizenzen**
**D-5090 Leverkusen 1, Bayerwerk (DE)**

(72) Erfinder: **Harnisch, Horst, Dr.**
**Heinenbusch 4**
**D-5203 Much (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 021 304 B1

Cumarinverbindungen sowie deren Herstellung und Verwendung als Farbstoffe

Gegenstand der Erfindung sind Verbindungen der allgemeinen Formel

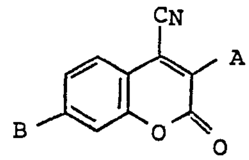

(I)

worin

A für einen gegebenenfalls durch 1-2 $C_1$- bis $C_4$-Alkyl, $C_1$- bis $C_4$-Alkoxy, 1-2 Chlor, Phenyl, Cyclohexyl, $C_1$- bis $C_4$-Alkylsulfonyl oder $C_1$- bis $C_4$-Alkoxy-carbonyl substituierten Benzoxazol-, Benzthiazol-, Benzimidazol-, Chinazolon- oder 5-Phenyl-1,3,4-thiadiazol-2-yl-rest,

B für einen Rest der Formel

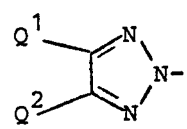

oder —OW

$Q^1$ für $C_1$- bis $C_4$-Alkyl, Phenyl, Toluyl, Chlorphenyl, Styryl, $C_1$- bis $C_4$-Alkoxycarbonyl, Chlor, $C_1$- bis $C_4$-Alkoxy oder Cyan,

$Q^2$ für Wasserstoff oder $C_1$-$C_4$-Alkyl,

$Q^1$ und $Q^2$ auch zusammen für die restlichen Glieder eines annellierten Naphtho- oder durch $C_1$- bis $C_4$-Alkoxy und/oder $C_1$- bis $C_4$-Alkyl substituierten Benzoringes,

W für einen gegebenenfalls durch Hydroxy, Acetoxy, $C_1$-$C_4$-Alkoxy, Phenoxy, Cyclohexyloxy, Phenyl-$C_1$-$C_2$-alkoxy oder Chlor substituierten $C_1$-$C_5$-Alkylrest, Allyl, Cyclohexyl oder Phenyl-$C_1$-$C_2$-alkyl stehen und wobei das gesättigte Ring-N-atom der Benzimidazolylreste durch Methyl, Ethyl, Benzyl oder $CH_2CO_2C_2H_5$ substituiert sein kann.

Bevorzugt sind diejenigen Reste A, die der Benzoxazol-, Benzthiazol- und Benzimidazol-Reihe angehören, sowie 5-Phenyl-1,3,4-thiadiazol-2-yl-Reste.

Besonders bevorzugte Reste W sind $C_1$-$C_4$-Alkyl, Allyl, Phenyl-$C_1$-$C_2$-alkyl, Phenoxyethyl und Cyclohexyl.

Besonders bevorzugte Reste A sind Benzoxazol-2-yl-Reste, die durch 1-2 $C_1$-$C_4$-Alkyl-, $C_1$-$C_2$-Alkoxy-, $C_1$-$C_2$-Alkyl-sulfonyl- oder $C_1$-$C_2$-Alkoxycarbonyl-Reste oder 1-2 Chloratome substituiert sein können.

Ein Verfahren zur Herstellung von Farbstoffen der Formel I ist dadurch gekennzeichnet, daß man Verbindungen der Formel

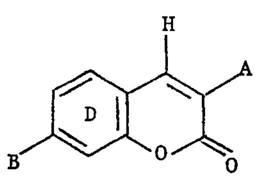

(II)

worin

A und B die oben angegebene Bedeutung besitzen, in einem polaren organischen Lösungsmittel in an sich bekannter Weise (vgl. DE-A-2 844 299) mit Cyanid-salzen umsetzt und gleichzeitig oder nachträglich mit Oxidationsmitteln behandelt.

Geeignete polare organische Lösungsmittel sind Alkohole, wie Methanol, Ethanol, Isopropanol, 2-Methoxy-ethanol, 2-Ethoxy-ethanol, Ethylenglykol, 2-Cyan-ethanol, insbesondere aber dipolar aprotische organische Lösungsmittel, wie Dimethylformamid, sowie Pyridin und Picoline.

Eine Zwischenisolierung des Cyanid-Anlagerungsproduktes ist nicht erforderlich.

Geeignete Oxidationsmittel sind beispielsweise Wasserstoffperoxid, Persulfate, Perborate, Salpetersäure, Brom, Sulfurylchlorid, Bleitetraacetat und Chloranil.

Als Cyanidsalze verwendet man vorteilhaft wasserlösliche, insbesondere Alkalicyanide.

Die Umsetzung von Cyanidsalzen wird im Temperaturbereich von 0-120 °C, vorzugsweise bei 10-60 °C, und die Oxidation im Bereich von − 5 bis 30 °C, vorzugsweise bei 0-15 °C, durchgeführt.

Die Ausgangsfarbstoffe der Formel II sind bekannt oder nach bekannten Verfahren herzustellen.

Einschlägige Patentpublikationen sind beispielsweise US-A-3 014 041, 3 288 801, 3 496 188, 3 816 413, 3 839 333, 3 704 302, 3 839 351, 3 776 905, 3 968 119, 4 055 568 sowie GB-A-1 269 004, 1 313 253 und 1 318 975.

Die neuen Farbstoffe eignen sich zum Färben oder Bedrucken von natürlichen, halbsynthetischen oder synthetischen Textilmaterialien, von Kunststoffen in der Masse, zum Spinnfärben sowie als Laserfarbstoffe.

Besonders eignen sich die neuen Farbstoffe zum Färben und Bedrucken von Polyestermaterialien, Celluloseacetat und -triacetat und Polyamid.

Mit den Farbstoffen der Formel I erhält man auf den genannten Substraten gelbe Färbungen und Drucke mit teilweise fluoreszierender Nuance.

Die Farbstoffe der Formel I, insbesondere die, wo B die Reste der Formel

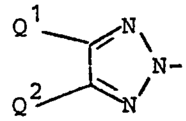

darstellt, sind farbstark, besitzen ein gutes Zieh- und Aufbauvermögen und zeigen gute allgemeine Echtheiten.

## Beispiel 1

15,3 g 3-Benzthiazol-2-yl-7-(4-methyl-5-phenyl-1,2,3-triazol-2-yl)-cumarin werden in 175 g Dimethylformamid unter Rühren mit 11,5 ml 30 %iger wäßriger Natriumcyanidlösung versetzt, 1 h bei 40-45 °C verrührt und filtriert. Zum Filtrat tropft man bei – 5 bis 0 °C innerhalb von 2 h 2 ml Brom hinzu und läßt die Mischung weitere 2 h bei 0 °C nachrühren. Der kristalline Niederschlag wird abgesaugt, mit Alkohol gewaschen, aus 150 ml Dimethylformamid umkristallisiert, mit Alkohol gewaschen und bei 70 °C im Vakuum getrocknet. Ausbeute 11 g Verbindung der Formel

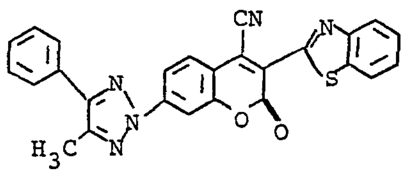

Mit dieser Substanz werden auf Polyester (130 °C) leuchtend gelbe Färbungen mit guten Echtheitseigenschaften erhalten.

3-Benzthiazol-2-yl-7-(4-methyl-5-phenyl-1,2,3-triazol-2-yl)-cumarin kann folgendermaßen hergestellt werden :

15,1 g 4-(4-Methyl-5-phenyl-1,2,3-triazol-2-yl)-salicylaldehyd-Natriumsalz, dessen Herstellung beispielsweise in DE-A-28 48 670 beschrieben ist, und 11,1 g 2-Benzthiazolyl-essigsäureethylester werden in 200 ml Ethanol unter Zusatz von 2 g Eisessig und 2,5 ml Piperidin 1 h unter Rückfluß zum Sieden erhitzt und dann abgekühlt. Der kristalline Niederschlag wird abgesaugt, zuerst mit Ethanol, dann mit Wasser gewaschen und bei 60 °C im Vakuum getrocknet. Ausbeute : 18 g.

Analog Formelbeispiel 1 werden folgende Farbstoffe, die ähnlich gute Echtheitseigenschaften aufweisen, hergestellt.

Verbindungen der Formel

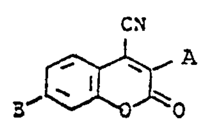

| Nr. | B | A | Farbton auf Polyester (130 °C) |
|---|---|---|---|
| (2) | 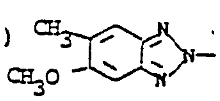 | 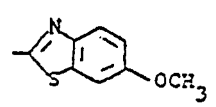 | brill. rotst. Gelb |
| (3) | 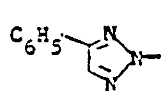 | 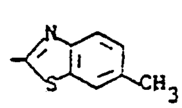 | brill. Gelb |

| Nr. | B | A | Farbton auf Polyester (130°C) |
|---|---|---|---|
| (4) | 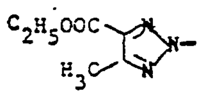 | 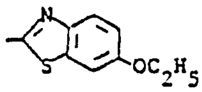 | brill. rotst. Gelb |
| (5) | 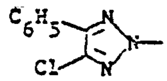 | 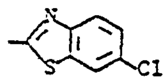 | brill. Gelb |
| (6) | 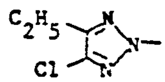 | 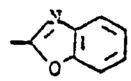 | brill. Gelb |
| (7) | 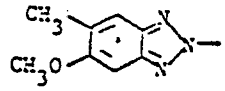 | 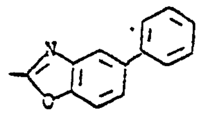 | brill. Gelb |
| (8) | 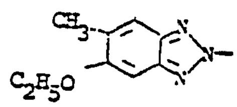 | 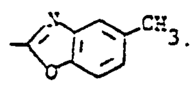 | brill. Gelb |
| (9) | 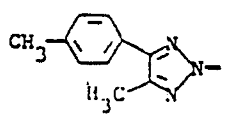 | 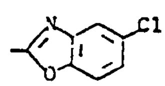 | brill. Gelb |
| (10) | 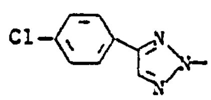 | 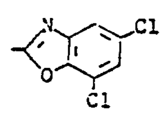 | brill. Gelb |
| (11) | 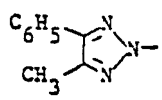 | 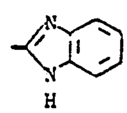 | brill. Gelb |
| (12) | 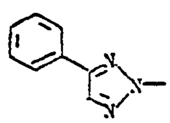 | 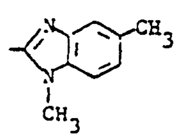 | brill. Gelb |
| (13) | 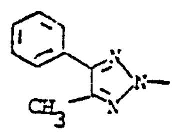 | 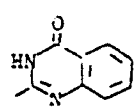 | brill. Gelb |
| (14) | 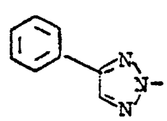 | 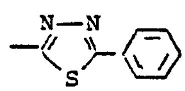 | brill. Gelb |
| (15) | 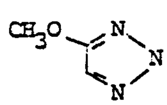 | 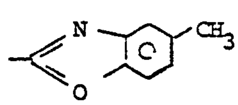 | brill. Gelb |
| (16) | 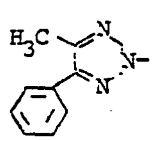 | 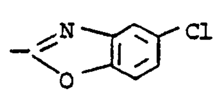 | brill. Gelb |

(17) 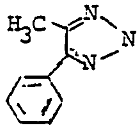 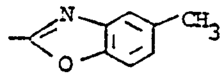 brill. Gelb

## Beispiel 18

32,8 g 7-Methoxy-3-(5-chlor-benzoxazol-2-yl)-cumarin werden in 500 ml Dimethylformamid unter Rühren mit 33 ml 30 %iger wäßriger Natriumcyanidlösung versetzt, 1 h bei 40-45 °C verrührt und filtriert. Zum Filtrat tropft man bei – 5° bis 0 °C innerhalb von 2 h 6 ml Brom hinzu und läßt die Mischung weitere 2 h bei 0 °C nachrühren. Der kristalline Niederschlag wird abgesaugt, mit Methanol gewaschen und bei 60 °C im Vakuum getrocknet. Ausbeute : 30,5 g Verbindung der Formel

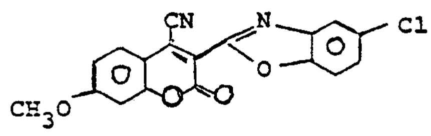

als rotes Kristallpulver.

Auf Polyester wird eine brillante grünstichig gelbe Färbung mit guten Echtheitseigenschaften erhalten.

In analoger Weise werden folgende Farbstoffe, die ähnlich gute Echtheitseigenschaften aufweisen, hergestellt.

Verbindungen der Formel

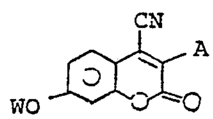

| Nr. | W | A | Farbton auf Polyester (100 °C) |
|---|---|---|---|
| (19) | $C_2H_5$ | 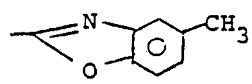 | brill. grünst. Gelb |
| (20) | $CH_2=CH-CH_2-$ | 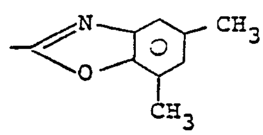 | " |
| (21) | $n-C_4H_9$ | 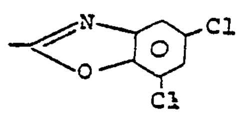 | brill. grünst. Gelb |
| (22) | 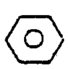 $-CH_2-O-CH_2-CH_2$ | 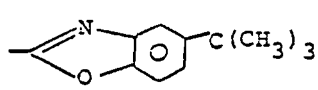 | " |
| (23) | 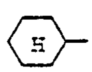 | 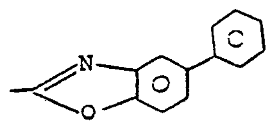 | " |
| (24) | $n-C_4H_9-O-(CH_2)_2$ | 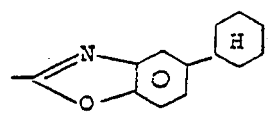 | " |

| Nr. | W | A | Farbton auf Polyester (100°C) |
|---|---|---|---|
| (25) | 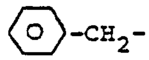 | 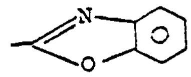 | " |
| (26) | 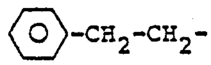 | 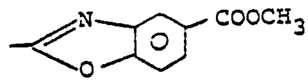 | " |
| (27) | 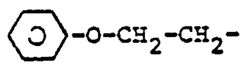 | 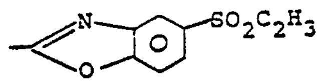 | " |
| (28) | $HO-(CH_2)_2-$ | 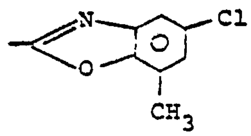 | brill. grünst. Gelb |
| (29) | $CH_3COO(CH_2)_2-$ | 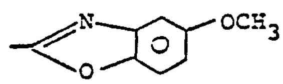 | " |
| (30) | $CH_3-$ | 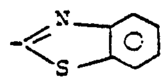 | brill. Gelb |
| (31) | $C_2H_5-$ | 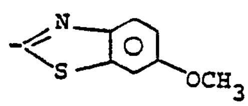 | " |
| (32) | 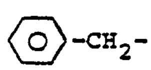 | 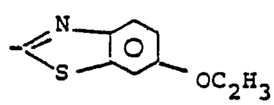 | " |
| (33) | $CH_3O-CH_2-CH_2-$ | 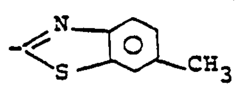 | " |
| (34) | $n-C_4H_9$ | 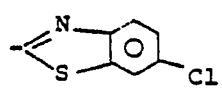 | " |
| (35) | $CH_3$ | 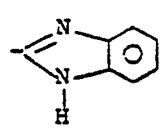 | brill. Gelb |
| (36) | $C_2H_5$ | 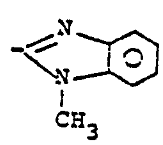 | " |
| (37) | $n-C_4H_9$ | 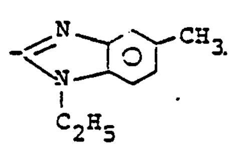 | " |

| Nr. | W | A | Farbton auf Polyester (100°C) |
|---|---|---|---|
| (38) | 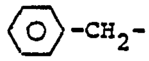 | 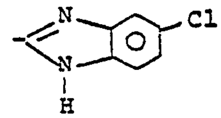 | " |
| (39) | 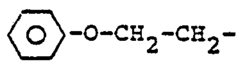 | 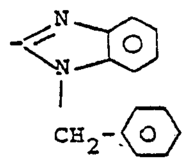 | " |
| (40) | $CH_2=CH_2-CH_2-$ | 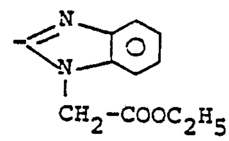 | " |
| (41) | $HO-CH_2-CH_2-$ | 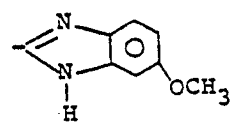 | " |
| (42) | $CH_3$ | 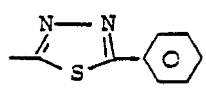 | brill. grünst. Gelb |
| (43) | $C_2H_5$ | 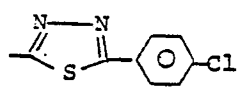 | " |
| (44) | $CH_3$ | 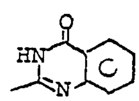 | " |

**Ansprüche**

1. Farbstoffe der allgemeinen Formel

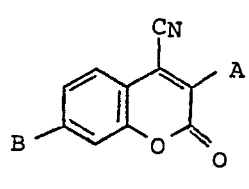

worin

A für einen gegebenenfalls durch 1-2 $C_1$- bis $C_4$-Alkyl, $C_1$- bis $C_4$-Alkoxy, 1-2 Chlor, Phenyl, Cyclohexyl, $C_1$- bis $C_4$-Alkylsulfonyl oder $C_1$- bis $C_4$-Alkoxycarbonyl substituierten Benzoxazol-, Benzthiazol-, Benzimidazol-, Chinazolon- oder 5-Phenyl-1,3,4-thiadiazol-2-yl-rest,

B für einen Rest der Formel

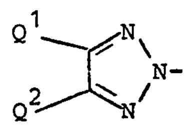

oder —OW

$Q^1$ für $C_1$- bis $C_4$-Alkyl, Phenyl, Toluyl, Chlorphenyl, Styryl, $C_1$- bis $C_4$-Alkoxycarbonyl, Chlor, $C_1$- bis $C_4$-Alkoxy oder Cyan,

$Q^2$ für Wasserstoff oder $C_1$-$C_4$-Alkyl,

$Q^1$ und $Q^2$ auch zusammen für die restlichen Glieder eines annellierten Naphtho- oder durch $C_1$- bis $C_4$-Alkoxy und/oder $C_1$- bis $C_4$-Alkyl substituierten Benzoringes,

W für einen gegebenenfalls durch Hydroxy, Acetoxy, $C_1$-$C_4$-Alkoxy, Phenoxy, Cyclohexyloxy, Phenyl-$C_1$-$C_2$-alkoxy oder Chlor substituierten $C_1$-$C_5$-Alkylrest, Allyl, Cyclohexyl oder Phenyl-$C_1$-$C_2$-alkyl stehen und wobei das gesättigte Ring-N-atom der Benzimidazolylreste durch Methyl, Ethyl, Benzyl oder $CH_2CO_2C_2H_5$ substituiert sein kann.

2. Farbstoffe gemäß Anspruch 1, worin A für einen gegebenenfalls durch 1-2 $C_1$-$C_4$-Alkyl, $C_1$-$C_4$-Alkoxy, 1-2 Chlor, Phenyl, Cyclohexyl, $C_1$-$C_4$-Alkylsulfonyl oder $C_1$-$C_4$-Alkoxycarbonyl substituierten Benzoxazol-, Benzthiazol- oder Benzimidazolrest steht.

3. Farbstoffe gemäß Anspruch 1, worin A für einen 5-Phenyl-1,3,4-thiadiazol-2-yl-Rest steht.

4. Farbstoffe gemäß Anspruch 1, worin W für $C_1$-$C_4$-Alkyl, Allyl, Phenyl-$C_1$-$C_2$-alkyl, Phenoxyethyl oder Cyclohexyl steht.

5. Verfahren zur Herstellung von Verbindungen gemäß Anspruch 1, dadurch gekennzeichnet, daß man Verbindungen der Formel

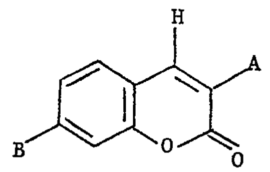

worin A, B die gleiche Bedeutung wie in Anspruch 1 besitzen, in einem polaren organischen Lösungsmittel mit Cyanidsalzen umsetzt und gleichzeitig oder nachträglich mit Oxidationsmittel behandelt.

6. Verwendung von Farbstoffen gemäß Anspruch 1 zum Färben von natürlichen, halbsynthetischen oder synthetischen Textilmaterialien, von Kunststoffen in der Masse, zum Spinnfärben synthetischer Fasermaterialien und als Laserfarbstoffe.

**Claims**

1. Dyestuffs of the general formula

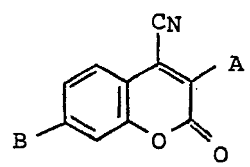

wherein

A represents a benzoxazole, benzothiazole, benzimidazole, quinazolone or 5-phenyl-1,3,4-thiadiazol-2-yl radical which is optionally substituted by 1-2 $C_1$- to $C_4$-alkyl, $C_1$- to $C_4$-alkoxy, 1-2 chlorine, phenyl, cyclohexyl, $C_1$- to $C_4$-alkyl-sulphonyl or $C_1$- to $C_4$-alkoxycarbonyl,

B represents a radical of the formula

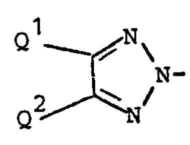

or —OW,

$Q^1$ represents $C_1$- to $C_4$-alkyl, phenyl, tolyl, chlorophenyl, styryl, $C_1$- to $C_4$-alkoxycarbonyl, chlorine, $C_1$- to $C_4$-alkoxy or cyano,

$Q^2$ represents hydrogen or $C_1$-$C_4$-alkyl,

$Q^1$ and $Q^2$ together also represent the remaining members of a fused-on naphtho or benzo ring, the Latter being substituted by $C_1$- to $C_4$-alkoxy and/or $C_1$- to $C_4$-alkyl, and

W represents allyl, cyclohexyl, phenyl-$C_1$-$C_2$-alkyl or a $C_1$-$C_5$-alkyl radical which is optionally substituted by hydroxyl, acetoxy, $C_1$-$C_4$-alkoxy, phenoxy, cyclohexyloxy, phenyl-$C_1$-$C_2$-alkoxy or chlorine, and in which the saturated ring N atom of the benzimidazolyl radical can be substituted by

methyl, ethyl, benzyl or $CH_2CO_2C_2H_5$.

2. Dyestuffs according to Claim 1, wherein A represents a benzoxazole, benzothiazole or benzimidazole radical which is optionally substituted by 1-2 $C_1$-$C_4$-alkyl, $C_1$-$C_4$-alkoxy, 1,2 chlorine, phenyl, cyclohexyl, phenyl, cyclohexyl, $C_1$-$C_4$-alkylsulphonyl or $C_1$-$C_4$-alkoxycarbonyl.

3. Dyestuffs according to Claim 1, wherein A represents a 5-phenyl-1,3,4-thiadiazol-2-yl radical.

4. Dyestuffs according to Claim 1, wherein W represents $C_1$-$C_4$-alkyl, allyl, phenyl-$C_1$-$C_2$-alkyl, phenoxyethyl or cyclohexyl.

5. Process for the preparation of compounds according to Claim 1, characterised in that compounds of the formula

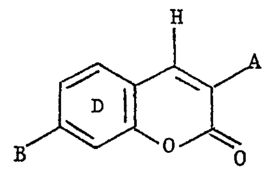

wherein A, B and C have the same meaning as in Claim 1, are reacted with cyanide salts in a polar organic solvent and are simultaneously or subsequently treated with oxidising agents.

6. Use of dyestuffs according to Claim 1 for dyeing natural, semisynthetic or synthetic textile materials, for mass-colouring plastics, for spin-dyeing synthetic fibre materials and as laser dyestuffs.

**Revendications**

1. Colorants de formule générale

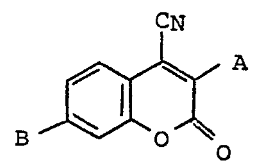

dans laquelle

A représente un reste benzoxazole, benzothiazole, benzimidazole, quinazolone ou 5-phényl-1,3,4-thiadiazole-2-yle éventuellement substitué par 1 à 2 groupes alkyle en $C_1$-$C_4$, alcoxy en $C_1$-$C_4$, 1 à 2 atomes de chlore, groupes phényle, cyclohexyle, (alkyle en $C_1$-$C_4$)-sulfonyle ou (alcoxy en $C_1$-$C_4$)-carbonyle,

B représente un reste de formule

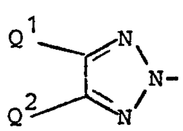

ou —OW

$Q^1$ représente un groupe alkyle en $C_1$-$C_4$, phényle, toluyle, chlorophényle, styryle, (alcoxy en $C_1$-$C_4$)-carbonyle, le chlore, un groupe alcoxy en $C_1$-$C_4$ ou cyano,

$Q^2$ représente l'hydrogène ou un groupe alkyle en $C_1$-$C_4$,

$Q^1$ et $Q^2$ représentent également, ensemble, les chaînons restants d'un cycle condensé naphto ou benzo substitué par des groupes alcoxy en $C_1$-$C_4$ et/ou alkyle en $C_1$-$C_4$,

W représente un groupe alkyle en $C_1$-$C_5$ éventuellement substitué par des groupes hydroxy, acétoxy, alcoxy en $C_1$-$C_4$, phénoxy, cyclohexyloxy, phényl-(alcoxy en $C_1$-$C_2$) ou le chlore, un groupe allyle, cyclohexyle ou phényl-(alkyle en $C_1$-$C_2$), l'atome d'azote cyclique saturé des restes benzimidazolyle pouvant être substitué par des groupes méthyle, éthyle, benzyle ou $CH_2CO_2C_2H_5$.

2. Colorants selon la revendication 1, dans lesquels A représente un reste benzoxazole, benzothiazole ou benzimidazole éventuellement substitué par 1 à 2 groupes alkyle en $C_1$-$C_4$, alcoxy en $C_1$-$C_4$, 1 à 2 atomes de chlore, groupes phényle, cyclohexyle, (alkyle en $C_1$-$C_4$)-sulfonyle ou (alcoxy en $C_1$-$C_4$)-carbonyle.

3. Colorants selon la revendication 1, dans lesquels A représente un reste 5-phényl-1,3,4-thiadiazole-2-yle.

4. Colorants selon la revendication 1, dans lesquels W représente un groupe alkyle en $C_1$-$C_4$, allyle, phényl-(alkyle en $C_1$-$C_2$), phénoxyéthyle ou cyclohexyle.

5. Procédé de préparation des composés selon la revendication 1, caractérisé en ce que l'on fait réagir des composés de formule

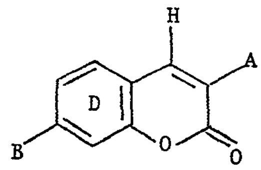

dans laquelle A, B et C ont la même signification que dans la revendication 1, dans un solvant organique polaire, avec des sels de l'acide cyanhydrique, et on traite en même temps ou à la suite par un agent oxydant.

6. Utilisation des colorants selon la revendication 1 pour la teinture de matières textiles naturelles, artificielles ou synthétiques, la coloration de résines synthétiques dans la masse, la teinture au filage de matières fibreuses synthétiques et en tant de colorants laser.